# EUROPÄISCHE PATENTSCHRIFT

(11) **EP 2 862 478 B1**
(45) Veröffentlichungstag und Bekanntmachung des Hinweises auf die Patenterteilung: **13.04.2016**
(21) Anmeldenummer: 15151033.6
(22) Anmeldetag: 01.09.2008
(51) Int. Cl.: A46B 9/02, A46B 9/04, A46B 15/00, A46B 3/00

(54) **Zahnbürste und Verfahren zur Herstellung**
Toothbrush and method for its manufacture
Brosse à dents et son procédé de fabrication

(43) Veröffentlichungstag der Anmeldung: 22.04.2015
(62) Teilanmeldung aus: 08015420.6
(73) Patentinhaber: Braun GmbH, 61476 Kronberg (DE)
(72) Erfinder: Stief, Christian, 61476 Kronberg/Taunus (DE); Haas, Martin, 61476 Kronberg/Taunus (DE); Störkel, Jens, 61476 Kronberg/Taunus (DE); Stich, Florian, 64521 Groß-Gerau (DE); Pfeifer, Ulrich, 61476 Kronberg/Taunus (DE)
(74) Vertreter: Töpert, Verena Clarita

(56) Entgegenhaltungen:
- WO-A-99/35911
- WO-A-2005/084486
- WO-A-2006/050039
- DE-A1-102004 020 706
- US-A- 3 229 318
- US-A1- 2004 019 990

## Beschreibung

Die vorliegende Erfindung betrifft eine Zahnbürste die einen Handgriff und einen Halsabschnitt aufweist, der den Handgriff mit einem Kopf verbindet, wobei der Kopf eine Reinigungsseite und gegenüberliegend zu dieser eine Rückseite aufweist, wobei die Reinigungsseite mehrere Borstenbüschel zur Zahnreinigung aufweist, die mit einem Anker durch Bestopfungsöffnungen im Kopf befestigbar sind, wobei jeder Bestopfungsöffnung ein Sackloch mit Seitenwandungen und einem Boden zugeordnet ist. Ferner betrifft die Erfindung ein Verfahren zur Herstellung einer solchen Zahnbürste.

Aus der WO 2006/050039 A1 ist ein Zahnbürstenkopf bekannt, bei dem die Sacklöcher unterschiedlich tief von der Reinigungsseite des Kopfes her in den Kopf hinein reichen. Bei Ausbildung gleich langer Borstenbüschel für die jeweiligen Sacklöcher wird auf diese Weise vorgeschlagen eine Topographie der Borstenenden an der Reinigungsseite zu erzeugen.

Aus der DE 102 21 786 A1 ist ebenfalls bekannt Borstenbüschel mit gleicher Länge in Bestopfungssacklöcher in den Kopf einzusetzen, wobei hier eine unterschiedliche Topographie ebenfalls der Borstenenden angestrebt wird, indem die Reinigungsseite des Kopfes schräg ausgebildet ist.

Aus der WO 2008/059435 ist eine Zahnbürste bekannt, die eine LED, teils im Kopf und teils aus diesem herausragend, im Zahnbürstenborstenfeld aufweist.

Eine weitere Zahnbürste ist aus der WO 2005/084486 A bekannt.

Es wird angestrebt die Dicke des Zahnbürstenkopfes möglichst gering zu halten, um eine komfortable Nutzung im Mund zu ermöglichten. Demgegenüber steigen jedoch die funktionalen Anforderungen an einen Zahnbürstenkopf, so dass Kopfgeometrien erforderlich werden, die aufgrund ihrer komplexen Innenstruktur eine optisch fehlerfreie Herstellung eines Hartkunststoffspritzlings erschweren. Der im Spritzgießverfahren in das Werkzeug zum Spritzen des Kopfes einfließende Kunststoff ist zwischen den verschiedenen Bestopfungssacklöchern und anderen Ausnehmungen oder Hohlräumen des Spritzlinges Turbulenzen ausgesetzt und fließt daher sehr ungleichmäßig, insbesondere zu Hinterschnitten oder komplexeren Strukturen, die weiter vom Einspritzpunkt entfernt liegen. Dieses Problem wird verschärf, sobald Kunststoffe für den Kopf zum Einsatz kommen, die ein stärkeres Schwindverhalten beim Abkühlen nach dem Spritzgußprozeß aufweisen. Je nach Innenstruktur des Kopfes sind daher optische Fehlstellen oder Einfallstellen, insbesondere auch an der Rückseite des Kopfes, die unerwünschte Folge.

Es ist daher eine Aufgabe der vorliegenden Erfindung, eine Zahnbürste bereitzustellen, die innerhalb des Kopfes eine komplexe Innenstruktur aufweist und dennoch, insbesondere auch bezüglich der Rückseite des Kopfes, optisch einwandfrei herstellbar ist. Es ist ferner eine Aufgabe der vorliegenden Erfindung ein entsprechendes Verfahren bereitzustellen.

Diese Aufgabe wird durch eine Zahnbürste mit den Merkmalen des Anspruchs 1 und durch ein Verfahren mit den Merkmalen des Anspruchs 14 gelöst.

In vorteilhafter Ausbildung der Erfindung hat sich gezeigt, dass durch einen kürzesten Abstand x oder y zwischen einem Boden eines Sackloches, das zur Bestopfung mit Borsten vorgesehen ist und der Rückseite des Kopfes von 0,5 bis 2,5 mm ein dünnerer Zahnbürstenkopf bereitstellbar ist, der komfortabler im Mund zu handhaben ist. Wenn sich zusätzlich die Querschnittsbereiche innerhalb des Kopfes zwischen den Böden und der Rückseite von Sackloch zu Sackloch erheblich unterscheiden und somit eine komplexere Struktur gegeben ist, so ist von Bedeutung, dass im Übergangsbereich zwischen dem Boden des Sackloches und den Seitenwandungen des Sackloches eine Abschrägung oder Verrundung ausgebildet ist, da sich somit ein fehlerfreierer Spritzling erzeugen lässt. Die Größe des Bodens kann dabei beliebig klein werden, wenn der das Sackloch verkleinernde, abgeschrägte oder verrundete Bereich entsprechend größer wird, um nahezu einen Boden auszubilden. Als Querschnittsbereich zwischen Boden und Rückseite des Kopfes wird insbesondere ein Schnitt durch den Kopf angesehen, der das Sackloch durchschneidet und durch den eine Ebene gebildet ist, die senkrecht zur Zahnbürstenlängsache angeordnet ist. Die Zahnbürstenlängsachse erstreckt sich üblicherweise vom Kopfende bis zum Handgriffende der Zahnbürste oder je nach Gesamtgeometrie zumindest vom Kopfanfang benachbart zum Halsabschnitt bis zum Kopfende. Unterschiede im Querschnittsbereich bzw. in den Wanddicken des Spritzlings können durch Aussparungen und Hohlräume im Spritzling, Hinterschnitte oder unterschiedliche Ausbildung der Sacklöcher relativ zueinander entstehen. Natürlich sollen ähnliche Probleme für die Seiten des Kopfes oder die Reinigungsseite oder andere Abschnitte der Zahnbürste in ähnlicher Weise behoben werden.

In weiterer vorteilhafter Ausbildung ist der kürzeste Abstand x und y zwischen dem Boden und der Rückseite des Kopfes mit 0,8 bis 2 mm festgelegt. Insbesondere wenn die Länge der Sacklöcher und damit die Tiefe des Bodens bzw. der Abstand zur Rückseite so aneinander angepasst sind, dass sich in einer komplexen Kopfstruktur etwa gleichmäßig starke Wanddicken ausbilden, so ist gewährleistet, dass eine gleichmäßige Abkühlung im Spritzling nach dem Spritzgussverfahren und damit ein gleichmäßiger Schwund erfolgt. Einfallstellen an stärkeren Materialansammlungen können so vermieden werden. Insbesondere wenn dieser kürzeste Abstand x und y für alle oder die Mehrzahl von Sacklöchern des Kopfes einen Abstand von 0,5 bis 2,5 mm oder 0,8 bis 2 mm zwischen Boden und Rückseite aufweist, ist gewährleistet, dass, je nach sonstiger Innenstruktur des Kopfes, noch ausreichend gleichmäßige Materialstärken im Kopf, trotz einer inhomogenen Innenstruktur, ausgebildet sind, um einen fehlerfreien Spritzling herstellen zu können.

In weiterer vorteilhafter Ausbildung sind dritte und vierte Sacklöcher vorgesehen, die bis zur gleichen Tiefe mit Borsten bestopfbar sind, wobei die dritten und vierten Sacklöcher derart ausgebildet sind, dass sich deren Böden unterschiedlich tief erstrecken. Somit ist ermöglicht, dass die Bestopfungstiefe der Borstenbüschel in die dritten und vierten Sacklöcher gleich ist, aber durch unterschiedliche Tiefenerstreckungen Ausgleichsräume gegen Materialansammlungen und die damit einhergehenden Materialschwundprobleme geschaffen sind.

In weiterer vorteilhafter Ausbildung ist das vierte Sackloch nach der Abschrägung oder Verrundung mit einer Verjüngung (gegenüber der darüberliegenden Seitenwand) und einer sich daran anschließenden weiteren Verrundung oder Abschrägung und erst dann mit dem abschließenden Boden versehen. Die Verjüngung kann somit frei von einer Bestopfung mit Borsten bleiben, so dass, wie oben ausgeführt, eine soweit möglich einheitliche Bestopfungstiefe und damit ein vereinfachter Fertigungsprozeß gegeben ist.

In weiterer vorteilhafter Ausbildung weist der Kopf einen ersten Innenbereich und einen zweiten Innenbereich auf, wobei der erste Innenbereich aus Hartkunststoff ausgebildet ist und der zweite Innenbereich ein elektrisch betreibbares Funktionselement oder einen Teil davon aufweist. Der Kopf ist somit durch eine inhomogene, zerklüftete Innenstruktur gekennzeichnet, wobei durch den zweiten Innenbereich Hohlräume im Spritzling des ersten Innenbereiches vorzusehen sind. Diese zusätzlich zu den Sacklochgeometrien bedingten Hohlraumausbildungen im Kopf führen zu einer erhöhten Komplexität, so dass die Fließbereiche der Kunststoffschmelze während des Spritzgießens im Werkzeug stark verengt, verwinkelt, begrenzt und mit Hinterschnitten ausgebildet sind. Ferner definiert der zweite Innenbereich maximale Materialstärken, die eine gewisse Abkühlzeit für den Kunststoffspritzling festlegen.

In weiterer vorteilhafter Ausbildung ist ein Anspritzpunkt für den Hartkunststoff des Kopfes am Hals oder am Handgriff vorgesehen und die Sacklöcher relativ zueinander unterschiedlich weit axial vom Anspritzpunkt am Kopf entfernt angeordnet, wobei zwischen diesen relativ zueinander unterschiedlich weit angeordneten Sacklöchern im Hartkunststoff des Kopfes ein Freibereich für das Funktionselement vorgesehen ist. Bevorzugt sind somit Sacklöcher sowohl in Spritzrichtung vor, als auch in Spritzrichtung nach dem Freibereich bzw. Hohlraum für das Funktionselement ausgebildet. Zusätzlich können auch seitlich bzw. auch über dem Hohlraum Sacklöcher vorgesehen sein, so dass die Innenstruktur weiter an Komplexität zunimmt und eine genaue Berücksichtigung der Materialstärken bzw. Maßnahmen gegen unerwünschte Schwindungseffekte notwendig sind.

In weiterer vorteilhafter Ausbildung weist der Kopf zumindest ein fünftes Sackloch auf, das benachbart und oberhalb des Funktionselementes bzw. oberhalb des Freibereiches oder oberhalb des zweiten Innenbereiches angeordnet ist und kürzer als die dritten und vierten Sacklöcher ausgebildet ist. Es wird also vorgeschlagen, die Sacklochtiefe an den Stellen im Kopf zu verkürzen, an denen der Freiraum entsprechend zur Ausbildung von Sacklöchern durch andere Hohlräume begrenzt ist. In einer alternativen Ausführungsform sind alle Sacklöcher auf dieses verkürzte Maß einheitlich tief von der Reinigungsseite des Kopfes in den Kopf hinein ausgebildet.

In weiterer vorteilhafter Ausbildung ist die Rückseite des Kopfes aus dem gleichen Hartkunststoff wie die Reinigungsseite ausgebildet. Dies schließt nicht aus, dass dennoch an anderen Stellen im Zweikomponenten- oder Mehrkomponentenspritzgießverfahren der Kopf spritzgegossen wird, wenn z. B. im Reinigungsbereich Elastomerelemente angeformt sein sollen. Die Rückseite bleibt jedoch vorzugsweise zumindest teilweise frei von einer zweiten Kunststoffkomponente, die zwar einerseits optische Fehlstellen am Spritzling kaschieren könnte, andererseits aber zusätzlich zur Dicke des Kopfes aufträgt.

In weiterer vorteilhafter Ausbildung ist der Kopf aus einem Hartkunststoff gebildet, der mehr als 1 % Materialschwund nach dem eigentlichen Spritzguß aufweist. Es wird demzufolge bevorzugt die Materialschwundprobleme, die ab 1 % Materialschwund bereits zu optischen Fehlstellen führen können, nicht durch die Auswahl eines anderen, andere Nachteile mit sich bringenden Hartkunststoffes zu lösen, der ebenfalls im Spritzgießen von Zahnbürstenkörpern gebräuchlich ist, sondern die Innenstruktur des Kopfes an die Erfordernisse des Materialschwundes anzupassen.

In weiterer vorteilhafter Ausbildung ist der Kopf aus Polypropylen (PP-Hartkunststoff) ausgebildet. Polypropylen weist üblicherweise etwa 2 % Materialschwund nach dem Spritzgießverfahren auf.

In weiterer vorteilhafter Ausbildung ist der Kopf aus Polyethylen, POM, SAN oder Copolyester Hartkunststoff ausgebildet.

In weiterer vorteilhafter Ausbildung weist der Kopf erste und zweite Borstenbüschel mit unterschiedlicher Länge vom Sacklochboden bis zum Borstenende vom Reinigungsbereich des Kopfes beabstandet auf, wobei die ersten und zweiten Borstenbüschel etwa gleiche Länge von der Reinigungsseite bis zum Borstenende aufweisen. Alternativ sind die ersten und zweiten Borstenbüschel von der Reinigungsseite bis zum Borstenende mit unterschiedlicher Länge versehen.

In weiterer vorteilhafter Ausbildung ist zumindest ein Sackloch im Kopf vorgesehen, dessen Mittelachse winklig zum Lot auf der Reinigungsseite angeordnet ist. Es sind also Sacklöcher bzw. Bestopfungslöcher im Kopf vorgesehen, die in diesem schräg verlaufen und somit winklig aus dem Kopf heraustretende Borstenbüschel aufnehmen können. Winklige Borstenbüschel erhöhen die Reinigungsleistung der Zahnborsten am Zahn, wobei jedoch die winkligen Sacklöcher, insbesondere bei versetzt winkligen Anordnungen zu erhöhten Turbulenzen der Kunststoffschmelze im Werkzeug des zu erzeugenden Spritzlings führen können.

Die Erfindung betrifft ebenfalls ein Verfahren, bei dem eine Zahnbürste mit den Merkmalen des Anspruchs 1 hergestellt wird.

Weitere Ziele, Vorteile und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine perspektivische Darstellung eines mit Borsten versehenen Kopfes einer Zahnbürste nach der Erfindung,
- Fig. 2: eine Draufsicht auf den Kopf nach Fig. 1 ohne Beborstung,
- Fig. 3: einen Längsschnitt entlang der Linie A-A in Fig. 2 und
- Fig. 4: eine Querschnittsdarstellung entlang der Linie B-B in Fig. 2 mit zusätzlicher Beborstung im Kopf.

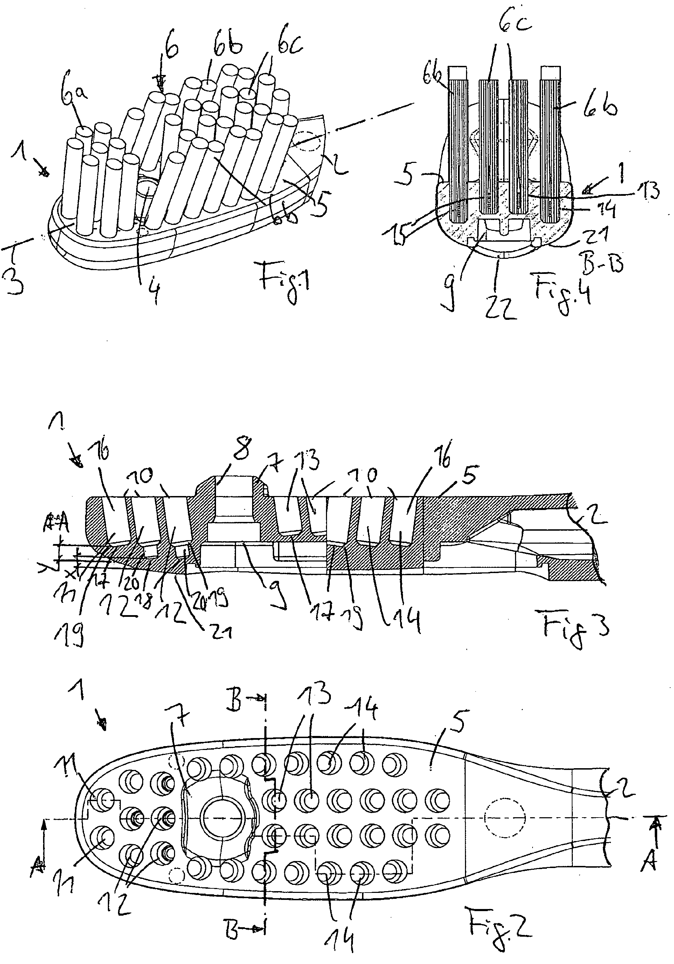

Fig. 1 zeigt in perspektivischer Darstellung den Kopf einer manuellen oder elektrischen Zahnbürste. Der Halsabschnitt der Zahnbürste schließt sich an der Abrisslinie 2 an und ist in den Figuren nicht dargestellt. In weiterer Längserstreckung entlang der Längsachse 3 folgt nach dem Halsabschnitt ein Handgriff der Zahnbürste, in dem gemäß der vorliegenden Ausführungsform elektrische Komponenten aufgenommen sind, um ein elektrisch betreibbares Funktionselement im Kopf mit Energie und den entsprechenden elektrischen Komponenten zu versorgen. Der Handgriff als auch der Halsabschnitt sind hierzu innen vorzugsweise mit Hohlbereichen versehen. Das elektrisch betreibbare Funktionselement ist im vorliegenden Fall vorzugsweise eine LED, die an der Reinigungsseite 5 des Kopfes hervorspringend innerhalb der Borstenbüschel 6 angeordnet ist. Die Reinigüngseite 5 ist gemäß der vorliegenden Ausführungsform vorzugsweise planar ausgebildet. Auf der Reinigungsseite sind vordere Reinigungsborsten 6a angeordnet, die benachbart zum distalen Ende des Kopfes 1 positioniert sind. Die vorderen Reinigungsborsten 6a sind nach vorne winklig zur Längsachse 3 ausgerichtet, so dass die hinteren Weisheitszähne besonders gut erreichbar sind. Ferner weist das Borstenfeld zwei Außenreihen mit Borstenbüscheln 6b auf, die gemäß der vorliegenden Ausführungsform zum Handgriff geneigt angeordnet sind. Zwischen diesen Außenreihen mit Borstenbüscheln 6b sind zwei mittlere Borstenreihen vorgesehen mit Borstenbüscheln 6c, die zum distalen Ende des Kopfes 1 hin geneigt angeordnet sind. Es sei angemerkt, dass die Zahnbürste beliebige andere Borstenkonfigurationen oder Mundpflegeelemente in Kombination mit Borstenbüscheln 6 aufweisen kann.

Die Fig. 2 zeigt eine Draufsicht auf den Kopf und damit die Reinigungsseite 5 der Zahnbürste. Die Fig. 3 zeigt einen Längsschnitt entlang der Linie A-A in Fig. 2 und die Fig. 4 zeigt einen Querschnitt entlang der Linie B-B in Fig. 2. In den Figuren 3 und 2 sind die Borstenbüschel 6 nicht dargestellt. In Fig. 4 sind die Borstenbüschel zusätzlich ergänzt. In der vorderen Hälfte des Kopfes 1 ist eine Rampe 7 oder alternativ z. B. ein Elastomerelement (nicht dargestellt) vorgesehen, die/das die LED 4 umgibt. Die zugehörigen Kabelverbindungen sind in den Figuren 2, 3 und 4 nicht dargestellt. Die LED wird in die Montageöffnung 8 innerhalb der Rampe 7 bzw. des Elastomerelementes eingesetzt. Im Inneren des Kopfes schließt sich ein Freibereich 9 bzw. Hohlraum 9 an, in dem die elektrischen Zuführleitungen für das elektrisch betreibbare Funktionselement (hier LED) vorzusehen sind. Der Spritzling des Kopfes 1 weist für diesen Freibereich entsprechende Ausnehmungen auf.

Wie insbesondere aus Fig. 3 hervorgeht, sind zur Aufnahme der Borstenbüschel 6a durch Bestopfungsöffnungen 10 Sacklöcher 11, 12, 13 und 14 vorgesehen. Die Sacklöcher werden mit Borstenbüschel, die ihrerseits aus einer Vielzahl von Borsten bzw. Filamenten bestehen, nach dem so genannten Ankerbestopfungsverfahren (auch Stapling Technologie genannt) bestopft. Dabei wird ein Anker 15 (siehe Fig. 4) mittig in ein Borstenbüschel nach bekannter Art und Weise eingetrieben, der sich im Hartkunststoff des Kopfes setzt, und so eine sichere Befestigung der Borstenbüschel 6 im Kopf gewährleistet. Die Sacklöcher 11, 12, 13 und 14 weisen jeweils Seitenwandungen 16 auf, die die seitlichen Begrenzungsflächen für die Borstenbüschel in den Sacklöchern bilden. Die Sacklöcher definieren so zusammen mit den Seitenwandungen 16 in der Regel einen zylindrischen Körper. Nach unten im Inneren des Kopfes 1 werden die Sacklöcher begrenzt durch Böden 17 und 18. Die Seitenwandungen 16 werden mit den Böden 17 über Abschrägungen bzw. Verrundungen, die letztlich einen konisch zulaufenden oder kegelstumpfartigen Abschnitt im Sackloch bilden verbunden. Der Kopf 1 weist gemäß dieser Ausführungsform Sacklöcher 11, 13 und 14 auf, die ausschließlich durch die Seitenwandungen 16, die daran anschließenden Abschrägungen oder Verrundungen 19 und die Böden 17 seitlich begrenzt werden. Die Borstenbüschel werden etwa bis zu den Böden 17 in den Sacklöchern 11, 13 und 14 bestopft. Die Sacklöcher 12 sind abweichend von den übrigen Sacklöchern mit Verjüngungen 20 versehen, so dass sich für diese Sacklöcher folgende Struktur ergibt. Beginnend bei den Bestopfungsöffnungen 10 der Sacklöcher 12 schließen sich in die Tiefe des Kopfes 1 Seitenwandungen 16 an, an die sich nach unten eine Abschrägung oder Verrundung 19, die ebenfalls, wie bei den anderen Sacklöchern, konisch oder kegelstumpfartig zulaufend ausgebildet ist, anschließt. Im weiteren Tiefenverlauf schließt sich an die Abschrägung oder Verrundung 19 ein verjüngter Abschnitt 20 an, der in diesem Fall ebenfalls hohl, zylindrisch, jedoch mit kleinerem Durchmesser als durch die Seitenwandung 16 gegeben ausgebildet ist. An diesen verjüngten Abschnitt schließt sich wiederum eine weitere Abschrägung oder Verrundung an, die die Verjüngung mit dem Boden 18 der Sacklöcher 12 verbindet. Die Verjüngung kann auch durch andere Geometrien, wie z. B. einen Kegelstumpf, Kegel, Konus oder gekrümmte Flächen gebildet werden. Die Bestopfung der Sacklöcher 12 erfolgt abweichend von den übrigen Sacklöchern nicht bis zum Boden, sondern nur bis zur ersten Abschrägung oder Verrundung 19, die sich etwa auf gleicher Tiefenerstreckung wie die Abschrägung oder Verrundung 19 der benachbarten Sacklöcher 11 befindet. Somit ist für die vordere Gruppe aus Borstenbüscheln 6a des Kopfes 1 eine gleichmäßige Bestopfungstiefe im Kopf 1 gegeben, so dass der Herstellprozeß hierfür vereinfacht ist. Die Verjüngung 20 verfolgt den Zweck, dass sich in Folge Materialschwundes bei einer ohne diese Verjüngung vorgesehenen Materialansammlung im Querschnittsbereich des Kopfes an der Rückseite keine Einfallstellen bilden, weil der Schwund durch die geringere Materialansammlung geringer ist und die Abkühlzeit des Kunststoffes nach dem Spritzgießen verkürzt wird. Die vertikale Verlängerung des tiefsten Punktes des Bodens der Sacklöcher zur Außenfläche der Rückseite 21 des Kopfes definiert die kürzesten Abstände x bzw. y (siehe Fig. 3). Gemäß der vorliegenden Ausführungsform ist für x als kürzesten Abstand zwischen der tiefsten Stelle des Sackloches 12 und der Rückseite 21 eine Distanz von etwa 1 mm vorgesehen. An der Stelle y ist zwischen der tiefsten Stelle des Sackloches 11 und der Rückseite 21 unmittelbar darunter ein kürzester Abstand von etwa 1,2 bis 1,6 mm vorgegeben. Vorteilhafterweise variiert dieser Abstand für alle Sacklöcher des Kopfes zwischen 0,5 bis 2,5 mm oder bevorzugt zwischen 0,8 und 2 mm. Weil diese Bereiche vom Anspritzpunkt unterschiedlich weit entfernt sein können, kann es sinnvoll sein, auch unterschiedliche Distanzen zwischen den tiefsten Böden der Sacklöcher und der Rückseite des Kopfes vorzusehen.

Die Sacklöcher 14 weisen ebenfalls die gleiche Bestopfungstiefe für die Borstenbüschel wie die Sacklöcher 11 und 12 auf. Die Sacklöcher 14 sind seitlich neben dem Hohlraum bzw. Freibereich 9 angeordnet. Die Sacklöcher 13 erstrecken sich weniger tief in den Kopf hinein als die übrigen Sacklöcher. In weiterer Tiefenerstreckung benachbart zu den Sacklöchern 13 ist der Hohlraum 9 ausgebildet (siehe hierzu insbesondere Figur 3 und 4).

Wie insbesondere aus Fig. 1 hervorgeht, ist die Länge der Borstenbüschel vom Boden der Sacklöcher bis zu den Borstenenden im Reinigungsbereich nicht durch die Tiefe der Sacklöcher vorgegeben. Die aus Fig. 1 dennoch erkennbare Topographie mit Höhenunterschieden in den Borstenbüschelendungen wird nach dem Bestopfen der Borstenbüschel in die Sacklöcher durch entsprechendes Zuschneiden der Borstenenden und anschließendes Endverrunden festgelegt. So sind im Kopf, wie in Fig. 4 dargestellt, Borstenbüschel 6b und 6c vorgesehen, die die gleiche Länge zwischen der Reinigungsseite 5 und den Borstenenden aufweisen, sich aber unterschiedlich Tief in den Sacklöchern des Kopfes erstrecken, so dass die Gesamtlänge der Borstenbüschel trotz gleicher Endhöhe verschieden ist.

Wie insbesondere aus Fig. 4 hervorgeht, ist der Hohlraum 9 durch einen Abschlussdeckel 22 dichtend verschlossen. Der Abschlussdeckel 22 ist in der Fig. 3 nicht dargestellt. Der Gegenstand dieser Anmeldung ist unabhängig von der Ausbildung eines Abschlussdeckels 22 oder Hohlräumen 9 im Kopf vorteilhaft nutzbar. Die Ausbildung eines Hohlraumes 9 zusätzlich zu den Sacklöchern erhöht jedoch die innere Komplexität des Kopfes 1, so dass Materialschwund und optische Fehlerfreiheit im Spritzgießprozeß mit den bekannten Herangehensweisen nicht erreichbar ist. Wie aus den Figuren 3 und 4 zudem hervorgeht, sind in vertikaler Verlängerung unterhalb von den Borstenbüscheln an der Rückseite 21 des Kopfes 1 Abschnitte vorgesehen, die nicht mit dem Hohlraum 9 oder dem Deckel 22 fluchten, so dass, insbesondere an diesen Stellen, Einfallstellen durch Materialschwund in Abwesenheit der hier vorgeschlagenen Maßnahmen entstehen könnten.

Gemäß dieser Ausführungsform wird der Kopf aus einer Kunststoffkomponente aus Hartkunststoff, namentlich Polypropylen gespritzt. Der Anspritzpunkt für den Spritzling im Werkzeug befindet sich vorzugsweise im Hals oder Handgriff der Zahnbürste. Alternativ ist der Anspritzpunkt im Kopf vorgesehen. In Abwesenheit einer weiteren Kunststoffkomponente oder insbesondere Weichkunststoffkomponente auf der Rückseite 21 des Kopfes 1 ist bei dieser Ausführungsform ebenfalls keine Möglichkeit gegeben, optische Fehlstellen im Spritzgußprozeß durch einen Weichkunststoff zu kaschieren. Je nach Art der optischen Fehlstelle ist zudem ein Kaschieren mit einem Überspritzen der optisch nicht einwandfreien Bereiche ebenfalls nicht in allen Fällen möglich.

Das Verfahren zur Herstellung der Zahnbürste setzt sich aus den Verfahrensschritten zusammen: Spritzgießen, zumindest des Kunststoffkopfes, ggf. zusammen mit dem Hals oder Handgriffabschnitten, insbesondere mit Polypropylen oder anderen Materialien. Danach wird der Kopf mit Borstenbüscheln 6 bestopft und Anker zur Befestigung der Borstenbüschel in den Kopf eingetrieben. Abschließend erfolgt eine Endbehandlung der Endabschnitte der Borstenbüschel 6 mit dem Zuschneiden der Borstenbüschel auf die richtige Länge bzw. Topographie und Endverrunden und ggf. weitere Endbehandlungsschritte. Falls das elektrisch betreibbare Funktionselement (hier LED) nicht schon im Spritzgießverfahren mit umspritzt wurde, erfolgt die Montage dieses Elements in den Kopf nach den obigen Beborstungsschritten.

## Patentansprüche

1. Zahnbürste, die einen Handgriff und einen Halsabschnitt aufweist, der den Handgriff mit einem Kopf (1) verbindet, wobei der Kopf (1) eine Reinigungsseite (5) und gegenüberliegend zu dieser eine Rückseite (21) aufweist, wobei die Reinigungsseite (5) mehrere Borstenbüschel (6) zur Zahnreinigung aufweist, die mit einem Anker (15) durch Bestopfungsöffnungen (10) im Kopf (1) befestigt sind, wobei jeder Bestopfungsöffnung (10) ein Sackloch (11, 12, 13, 14) mit Seitenwandungen (16) und einem Boden (17, 18) zugeordnet ist, wobei die Seitenwandungen (16) die seitlichen Begrenzungsflächen für die Borstenbüschel (6) in den Sacklöchern (11, 12, 13, 14) bilden und einen zylindrischen Körper definieren, und wobei im Übergangsbereich zwischen dem Boden (17, 18) und den Seitenwandungen (16) eine Abschrägung oder Verrundung (19) ausgebildet ist, wobei ein Querschnittsbereich des Kopfes (1) zwischen einem ersten Boden (17, 18) und der Rückseite (21) relativ zu einem Querschnittsbereich des Kopfes zwischen einem zweiten Boden (17, 18) und der Rückseite (21) unterschiedlich ist und wobei der erste Boden und der zweite Boden (17, 18) derart im Kopf angeordnet sind, dass der kürzeste Abstand y zwischen dem ersten Boden (17, 18) und der Rückseite (21) sowie der kürzeste Abstand x zwischen dem zweiten Boden (17, 18) und der Rückseite (21) jeweils 0,5 bis 2,5 mm beträgt, **dadurch gekennzeichnet, dass** der Kopf (1) dritte und vierte Sacklöcher (11, 12) aufweist, die bis zur gleichen Tiefe mit Borstenbüschel (6a) bestopfbar sind, wobei die dritten und vierten Sacklöcher (11, 12) derart ausgebildet sind, dass sich deren Böden (17, 18) unterschiedlich tief erstrecken und das vierte Sackloch (12) nach der Abschrägung oder Verrundung (19) eine Verjüngung (20) und daran anschließend eine weitere Verrundung oder Abschrägung (19) und daran anschließend den Boden (18) aufweist.

2. Zahnbürste nach Anspruch 1, **dadurch gekennzeichnet, dass** der erste und der zweite Boden (17, 18) im Kopf (1) derart angeordnet sind, dass der kürzeste Abstand x und y jeweils 0,8 bis 2 mm beträgt.

3. Zahnbürste nach zumindest einem der vorangegangenen Ansprüche, **dadurch gekennzeichnet, dass** der Kopf (1) einen ersten Innenbereich und einen zweiten Innenbereich aufweist, wobei der erste Innenbereich (9) aus Hartkunststoff ausgebildet ist und der zweite Innenbereich ein elektrisch betreibbares Funktionselement (4) oder einen Teil davon aufweist.

4. Zahnbürste nach Anspruch 3, **dadurch gekennzeichnet, dass** ein Anspritzpunkt für den Hartkunststoff des Kopfes (1) am Hals oder am Handgriff vorgesehen ist und dass die Sacklöcher (11, 12, 13, 14) relativ zueinander unterschiedlich weit axial entfernt von dem Anspritzpunkt am Kopf (1) angeordnet sind und dass zwischen diesen relativ zueinander unterschiedlich weit angeordneten Sacklöchern (11, 12, 13, 14) im Hartkunststoff des Kopfes (1) ein Freibereich für das Funktionselement (4) vorgesehen ist.

5. Zahnbürste nach Anspruch 4, **dadurch gekennzeichnet, dass** Sacklöcher (11, 12, 13, 14) sowohl in Spritzrichtung vor, als auch in Spritzrichtung nach dem Freibereich für das Funktionselement (4) ausgebildet sind.

6. Zahnbürste nach Anspruch 5, **dadurch gekennzeichnet, dass** Sacklöcher (11, 12, 13, 14) seitlich und/oder über dem Freibereich für das Funktionselement (4) ausgebildet sind.

7. Zahnbürste nach zumindest einem der vorangegangenen Ansprüche, **dadurch gekennzeichnet, dass** der Kopf zumindest ein fünftes Sackloch (13) aufweist, das benachbart und oberhalb des Funktionselementes (4) angeordnet und kürzer als die dritten und vierten Sacklöcher (11, 12, 14) ausgebildet ist.

8. Zahnbürste nach zumindest einem der vorangegangenen Ansprüche, **dadurch gekennzeichnet, dass** die Rückseite des Kopfes (1) zumindest teilweise aus dem gleichen Hartkunststoff wie die Reinigungsseite (5) ausgebildet ist.

9. Zahnbürste nach zumindest einem der vorangegangenen Ansprüche, **dadurch gekennzeichnet, dass** der Kopf aus einem Hartkunststoff ausgebildet ist, der mehr als 1 % Materialschwund nach einem Spritzgießverfahren aufweist.

10. Zahnbürste nach zumindest einem der vorangegangenen Ansprüche, **dadurch gekennzeichnet, dass** der Kopf aus Polypropylen Hartkunststoff ausgebildet ist.

11. Zahnbürste nach zumindest einem der Ansprüche 1 bis 9, **dadurch gekennzeichnet, dass** der Kopf aus Polyethylen, POM, SAN oder Copolyester Hartkunststoff ausgebildet ist.

12. Zahnbürste nach zumindest einem der vorangegangenen Ansprüche, **dadurch gekennzeichnet, dass** der Kopf (1) erste und zweite Borstenbüschel (6a, 6b, 6c) mit unterschiedlicher Länge vom Sackloch-Boden (17) bis zum Borstenende aufweist, wobei die ersten und zweiten Borstenbüschel (6a, 6b, 6c) etwa gleiche Länge von der Reinigungsseite (5) bis zum Borstenende aufweisen.

13. Zahnbürste nach zumindest einem der Ansprüche 1 bis 11, **dadurch gekennzeichnet, dass** der Kopf (1) erste und zweite Borstenbüschel (6a, 6b, 6c) mit unterschiedlicher Länge vom Sackloch-Boden (17) bis zum Borstenende aufweist, wobei die ersten und zweiten Borstenbüschel (6a, 6b, 6c) unterschiedliche Länge von der Reinigungsseite (5) bis zum Borstenende aufweisen.

14. Zahnbürste nach zumindest einem der vorangegangenen Ansprüche, **dadurch gekennzeichnet, dass** zumindest ein Sackloch im Kopf vorgesehen ist, dessen Mittelachse winklig zum Lot auf der Reinigungsseite angeordnet ist.

15. Verfahren zur Herstellung einer Zahnbürste nach zumindest einem der vorangegangenen Ansprüche, umfassend die Schritte:
- Spritzgießen, zumindest des Kunststoffkopfes (1) mit oder ohne Hals oder Handgriffabschnitten, insbesondere mit Polypropylen;
- Bestopfen des Kopfes (1) mit Borstenbüscheln (6);
- Eintreiben von Ankern (15) in den Kopf (1) zur Befestigung der Borstenbüschel (6); und
- Endbehandlung der Endabschnitte der Borstenbüschel (6) mit Zuschneiden der Borstenbüschel (6) auf die richtige Länge und Endverrunden.

## Claims

1. Toothbrush that has a handle and a neck section that connects the handle with a head (1), wherein the head (1) has a cleaning side (5) and opposite this a back side (21); wherein the cleaning side (5) has multiple bristle tufts (6) for dental cleaning that are secured in the head (1) with an anchor (15) via plug openings (10); wherein a blind hole (11, 12, 13, 14) with side walls (16) and a floor (17, 18) is associated with every plug opening (10); wherein the side walls (16) form the lateral boundary surfaces for the bristle tuft (6) in the blind holes (11, 12, 13, 14) and define a cylindrical body; and wherein a bevel or radius (19) is formed in the transition region between the floor (17, 18) and the side walls (16), wherein a cross-sectional area of the head (1) between a first floor (17, 18) and the back side (21) is different relative to a cross-sectional area of the head between a second floor (17, 18) and the back side (21), and wherein the first floor and the second floor (17, 18) are arranged in the head such that the shortest distance y between the first floor (17, 18) and the back side (21) and the shortest distance x between the second floor (17, 18) and the back side (21) are, respectively, 0.5 to 2.5 mm; **characterized in that** the head (1) has third and fourth blind holes (11, 12) that can be plugged with bristle tufts (6a) to the same depth, wherein the third and fourth blind holes (11, 12) are designed such that their floors (17, 18) extend to different depths, and the fourth blind hole (12) exhibits a taper (20) after the bevel or radius (19), and following said taper (20) has an additional radius or bevel (19), and following this the floor (18).

2. Toothbrush according to Claim 1, **characterized in that** the first and second floors (17, 18) are arranged in the head (1) such that the shortest distance x and y respectively amounts to 0.8 to 2 mm.

3. Toothbrush according to at least one of the preceding claims, **characterized in that** the head (1) has a first interior space and a second interior space, wherein the first interior space (9) is formed from hard plastic and the second interior space has an electrically operable function element (4) or a portion thereof.

4. Toothbrush according to Claim 3, **characterized in that** an injection point for the hard plastic of the head (1) is provided at the neck or at the handle, and **in that** the blind holes (11, 12, 13, 14) are arranged at distances from the injection point at the head (1) that are different relative to one another, and **in that** a free space for the function element (4) is provided in the hard plastic of the head (1), between these blind holes (11, 12, 13, 14) arranged at distances that are relative to one another.

5. Toothbrush according to Claim 4, **characterized in that** blind holes (11, 12, 13, 14) are formed both before and after (in the injection direction) the free space for the function element (4).

6. Toothbrush according to Claim 5, **characterized in that** blind holes (11, 12, 13, 14) are formed lateral to and/or above the free space for the function element (4).

7. Toothbrush according to at least one of the preceding claims, **characterized in that** the head has at least one fifth blind hole (13) that is arranged adjacent to and above the function element (4) and is formed to be shorter than the third and fourth blind holes (11, 12, 14).

8. Toothbrush according to at least one of the preceding claims, **characterized in that** the back side of the head (1) is formed at least in part from the same hard plastic as the cleaning side (5).

9. Toothbrush according to at least one of the preceding claims, **characterized in that** the head is formed from a hard plastic that exhibits more than 1% material shrinkage after an injection molding process.

10. Toothbrush according to at least one of the preceding claims, **characterized in that** the head is formed from polypropylene hard plastic.

11. Toothbrush according to at least one of Claims 1 through 9, **characterized in that** the head is formed from polyethylene, POM, SAN or copolyester hard plastic.

12. Toothbrush according to at least one of the preceding claims, **characterized in that** the head (1) has first and second bristle tufts (6a, 6b, 6c) with differing lengths from the blind hole floor (17) to the bristle end, wherein the first and second bristle tufts (6a, 6b, 6c) exhibit approximately the same length from the cleaning side (5) to the bristle end.

13. Toothbrush according to at least one of the preceding claims, **characterized in that** the head (1) has first and second bristle tufts (6a, 6b, 6c) with differing lengths from the blind hole floor (17) to the bristle end, wherein the first and second bristle tufts (6a, 6b, 6c) exhibit approximately the same length from the cleaning side (5) to the bristle end.

14. Toothbrush according to at least one of the preceding claims, **characterized in that** provided in the head is at least one blind hole, the middle axis of which is arranged at an incline relative to vertical at the cleaning side.

15. Method to produce a toothbrush according to at least one of the preceding claims, including the steps:
- injection molding of at least the plastic head (1) with or without neck or handle segments, in particular with polypropylene;
- plugging of the head (1) with bristle tufts (6);
- driving anchors (15) into the head (1) to secure the bristle tufts (6); and
- final treatment of the end segments of the bristle tufts (6), with cutting of the bristle tufts (6) to the correct length and end rounding.

## Revendications

1. Brosse à dents, présentant un manche et une partie de col, qui relie le manche à une tête (1), dans laquelle la tête (1) présente un côté nettoyage (5) et un côté arrière (21) opposé à celui-ci, dans laquelle le côté nettoyage (5) présente plusieurs touffes de soies (6) pour le brossage des dents, qui sont fixées avec un ancrage (15) à travers des ouvertures (10) de rembourrage dans la tête (1), dans laquelle chaque ouverture de rembourrage (10) est dotée d'un trou borgne (11, 12, 13, 14) avec des parois latérales (16) et un fond (17, 18), dans laquelle les parois latérales (16) forment les surfaces de limitation latérales pour les touffes de soies (6) dans les trous borgnes (11, 12, 13, 14) et définissent un corps cylindrique et dans laquelle, dans la zone de transition entre le fond (17, 18) et les parois latérales (16), un chanfrein ou un arrondi (19) est ménagé, dans laquelle une zone en section transversale de la tête (1) entre un premier fond (17, 18) et le côté arrière (21) est différente d'une zone en section transversale de la tête entre un deuxième fond (17, 18) et le côté arrière (21) et dans laquelle le premier fond et le deuxième fond (17, 18) sont agencés dans la tête de sorte que la distance la plus courte y entre le premier fond (17, 18) et le côté arrière (21), ainsi que la distance la plus courte x entre le deuxième fond (17, 18) et le côté arrière (21), soient de 0,5 à 2,5 mm chacune, **caractérisée en ce que** la tête (1) présente des troisième et quatrième trous borgnes (11, 12), qui peuvent être rembourrés jusqu'à la même profondeur que les touffes de soies (6a), dans laquelle les troisième et quatrième trous borgnes (11, 12) sont formés de sorte que leurs fonds (17, 18) s'étendent à des profondeurs différentes et **en ce que** le quatrième trou borgne (12) présente, après le chanfrein ou l'arrondi (19), un rétrécissement (20) et, raccordé à celui-ci, un autre arrondi ou chanfrein (19) et, raccordé à celui-ci, le fond (18).

2. Brosse à dents selon la revendication 1, **caractérisée en ce que** les premier et deuxième fonds (17, 18) sont agencés dans la tête (1) de sorte que les distances les plus courtes x et y soient chacune comprise entre 0,8 et 2 mm.

3. Brosse à dents selon au moins une des revendications précédentes, **caractérisée en ce que** la tête (1) présente une première zone interne et une seconde zone interne, dans laquelle la première zone interne (9) est formée en matière plastique rigide et la seconde zone interne présente un élément fonctionnel (4) à commande électrique ou une partie de celui-ci.

4. Brosse à dents selon la revendication 3, **caractérisée en ce qu'**un point d'injection pour la matière plastique rigide de la tête (1) est prévu sur le col ou sur le manche et **en ce que** les trous borgnes (11, 12, 13, 14) sont agencés à différentes distances axiales les uns par rapport aux autres du point d'injection sur la tête (1) et **en ce qu'**une zone libre pour l'élément fonctionnel (4) est prévu entre ces trous borgnes (11, 12, 13, 14) agencés à des distances différentes les uns par rapport aux autres dans la matière plastique rigide de la tête (1).

5. Brosse à dents selon la revendication 4, **caractérisée en ce que** les trous borgnes (11, 12, 13, 14) sont formés, dans la direction d'injection, aussi bien avant qu'après la zone libre pour l'élément fonctionnel (4).

6. Brosse à dents selon la revendication 5, **caractérisée en ce que** les trous borgnes (11, 12, 13, 14) sont formés à côté de et/ou sur la zone libre pour l'élément fonctionnel (4).

7. Brosse à dents selon au moins une des revendications précédentes, **caractérisée en ce que** la tête présente au moins un cinquième trou borgne (13), qui est agencé à côté et au-dessus de l'élément fonctionnel (4) et formé en étant plus court que les troisième et quatrième trous borgnes (11, 12, 14).

8. Brosse à dents selon au moins une des revendications précédentes, **caractérisée en ce que** le côté arrière de la tête (1) est formé au moins partiellement de la même matière plastique que le côté de nettoyage (5).

9. Brosse à dents selon au moins une des revendications précédentes, **caractérisée en ce que** la tête est formée d'une matière plastique qui présente plus de 1 % de pertes de matériau après un processus de moulage par injection.

10. Brosse à dents selon au moins une des revendications précédentes, **caractérisée en ce que** la tête est formée en matière plastique de polypropylène.

11. Brosse à dents selon au moins une des revendications 1 à 9, **caractérisée en ce que** la tête est formée de matière plastique rigide en copolyester, polyéthylène, POM ou SAN.

12. Brosse à dents selon au moins une des revendications précédentes, **caractérisée en ce que** la tête (1) présente des première et deuxième touffes de soies (6a, 6b, 6c) avec des longueurs différentes depuis le fond (17) des trous borgnes jusqu'aux extrémités des soies, dans laquelle les première et deuxième touffes de soies (6a, 6b, 6c) présentent une longueur à peu près identique depuis le côté de nettoyage (5) jusqu'aux extrémités de soies.

13. Brosse à dents selon au moins une des revendications 1 à 11, **caractérisée en ce que** la tête (1) présente des première et deuxième touffes de soies (6a, 6b, 6c) avec des longueurs différentes depuis le fond (17) des trous borgnes jusqu'aux extrémités des soies, dans laquelle les première et deuxième touffes de soies (6a, 6b, 6c) présentent une longueur différente depuis le côté de nettoyage (5) jusqu'aux extrémités de soies.

14. Brosse à dents selon au moins une des revendications précédentes, **caractérisée en ce qu'**au moins un trou borgne est prévu dans la tête, dont l'axe médian est agencé de façon angulaire par rapport à la soudure sur le côté de nettoyage.

15. Procédé de fabrication d'une brosse à dents selon au moins une des revendications précédentes, comprenant les étapes suivantes :
- mouler par injection au moins une tête en matière plastique (1) avec ou sans parties de manche ou de col, notamment avec du polypropylène ;
- rembourrer la tête (1) avec des touffes de soies (6) ;
- rentrer des ancrages (15) dans la tête (1) pour la fixation des touffes de soies (6) ; et
- finir le traitement de la partie d'extrémité des touffes de soies (6) en découpant les touffes de soies (6) à la bonne longueur et en arrondissant l'extrémité.
